# EUROPÄISCHE PATENTSCHRIFT

(11) **EP 1 409 867 B1**
(45) Veröffentlichungstag und Bekanntmachung des Hinweises auf die Patenterteilung: **04.07.2007**
(21) Anmeldenummer: 02732396.3
(22) Anmeldetag: 13.04.2002
(51) Int. Cl.: F02M 61/18

(54) **BRENNSTOFFEINSPRITZVENTIL**
FUEL-INJECTION VALVE
SOUPAPE D'INJECTION DE CARBURANT

(30) Priorität: 26.04.2001 DE 10120462
(43) Veröffentlichungstag der Anmeldung: 21.04.2004
(73) Patentinhaber: ROBERT BOSCH GMBH, 70442 Stuttgart (DE)
(72) Erfinder: MAIER, Martin, 71696 Möglingen (DE); DANTES, Günter, 71735 Eberdingen (DE); NOWAK, Detlef, 74199 Untergruppenbach (DE); HEYSE, Jörg, 74354 Besigheim (DE)
(86) Internationale Anmeldenummer: PCT/DE2002/001389
(87) Internationale Veröffentlichungsnummer: WO 2002/088541

(56) Entgegenhaltungen:
- EP-A- 0 918 157
- DE-A- 19 951 014
- US-A- 2 303 992
- US-A- 4 932 374
- US-A- 6 105 883
- US-A- 6 155 504

## Beschreibung

### Stand der Technik

Die Erfindung geht aus von einem Brennstoffeinspritzventil nach der Gattung des Hauptanspruchs.

Aus der DE 198 47 625 A1 ist bereits ein Brennstoffeinspritzventil bekannt, bei dem am stromabwärtigen Ende eine schlitzförmige Austrittsöffnung vorgesehen ist. Die Austrittsöffnung ist entweder in einer Lochscheibe oder unmittelbar im Düsenkörper selbst ausgebildet. Die schlitzförmigen Austrittsöffnungen sind stets zentral an der Ventillängsachse eingebracht. Stromaufwärts des Ventilsitzes ist eine Drallnut vorgesehen, die den zum Ventilsitz strömenden Brennstoff in eine kreisförmige Drehbewegung versetzt. Die flache Austrittsöffnung sorgt dafür, dass der Brennstoff fächerartig abgespritzt wird.

Aus der EP 0 918 157 A1 ist bereits ein Brennstoffeinspritzventil für Brennstoffeinspritzanlagen von Brennkraftmaschinen, insbesondere zum direkten Einspritzen von Brennstoff in einen Brennraum einer Brennkraftmaschine bekannt, das eine Ventillängsachse, einen Aktuator, ein bewegliches Ventilteil, das zum Öffnen und Schließen des Ventils mit einem festen Ventilsitz zusammenwirkt, der an einem Ventilsitzkörper ausgebildet ist, und eine stromabwärts des Ventilsitzes im Ventilsitzkörper ausgebildete Austrittsöffnung aufweist. Am stromabwärtigen Ende der Austrittsöffnung ist ein die Austrittsöffnung weitgehend verschließendes Schlitzbildungselement angeordnet, das aufgrund einer in dem Schlitzbildungselement vorgesehenen Vertiefung zwischen sich und einer Stirnseite des Ventilsitzkörpers einen schlitzförmigen Strömungsaustritt freilässt.

### Vorteile der Erfindung

Das erfindungsgemäße Brennstoffeinspritzventil mit den kennzeichnenden Merkmalen des Anspruchs 1 hat den Vorteil, dass auf einfache Art und Weise in beliebige Raumrichtungen Brennstoffsprays in Fächerstrahlform abgespritzt werden können. Der schlitzförmige Strömungsaustritt sorgt über die Breite des Fächerstrahls für eine unterschiedlich starke Strahlpenetration. Dies sorgt für Fächerstrahlfronten, die in vorteilhafter Weise bei der Direkteinspritzung ungleich tief in den Brennraum penetrieren. Der maximal verfügbare Brennraumquerschnitt wird dadurch ohne nennenswerte Benetzung der Brennraumwandung mit Brennstoffspray ausgefüllt. Die maximale Luftmenge wird ohne nennenswerte Wandbenetzung mit Brennstoffspray durchmischt.

Durch die in den abhängigen Ansprüchen 2-7 aufgeführten Maßnahmen sind vorteilhafte Weiterbildungen und Verbesserungen des im Anspruch 1 angegebenen Brennstoffeinspritzventils möglich.

In vorteilhafter Weise kann die Weite des Strömungsaustritts variiert werden. Die Querschnittsfläche des Strömungsaustritts ändert sich nämlich in Abhängigkeit des auf dem Schlitzbildungselement lastenden hydraulischen Drucks und der damit verbundenen plastischen Verformung des Schlitzbildungselements im Bereich des freien Umfangsabschnitts. Auf diese Weise kann gezielt die Durchflussrate des Ventils (dynamische Strömungsmenge) verändert und eingestellt werden. Der Dynamikbereich eines Brennstoffeinspritzventils kann auf diese Weise zu kleinen Abspritzmengen hin vorteilhaft vergrößert werden. So sind noch kleinere, exakt zugemessene Abspritzmengen im Leerlaufbetrieb bei Systemdruckabsenkung möglich.

Mit der druckgesteuerten Variation der Weite des Strömungsaustritts kann auch die Breite des Fächerstrahls, also der Ausbreitungswinkel des Strahlfächers, variiert werden. Da der Schlitzquerschnitt linsenförmig ist, ist der an den beiden spitz zulaufenden Schlitzenden austretende Massenstromanteil geringer als der Massenstromanteil im zentralen Bereich des Strömungsaustritts. Wird die Schlitzweite reduziert, so tritt entsprechend noch weniger Massenanteil an den beiden Schlitzenden aus, wodurch sich die effektiv durchströmte Schlitzlänge bei Schlitzbreitenreduzierung verringert. Dadurch wird der Ausbreitungswinkel des Fächerstrahls bei Druckabsenkung ebenfalls reduziert. Dies sorgt bei niedrigen Motorlasten für eine entsprechend reduzierte Ausbreitung der Spraywolke im Brennraum, was den Wirkungsgradforderungen entspricht.

Die statische Strömungsmenge kann über die Weite des Strömungsaustritts eingestellt werden. Am Ende der Ventilherstellung wird die Spaltweite durch mechanisches Verbiegen des Schlitzbildungselements eingestellt.

Die Gefahr der Verkokung des Strömungsaustritts wird durch die Druckpulsationen im Ventilbetrieb vermindert, da der Strömungsaustritt aufgrund der ständigen Weitenvariation "atmet" . Durch das "Atmen" werden Verkrustungen im Bereich des Strömungsaustritts mechanisch abgetragen.

### Zeichnung

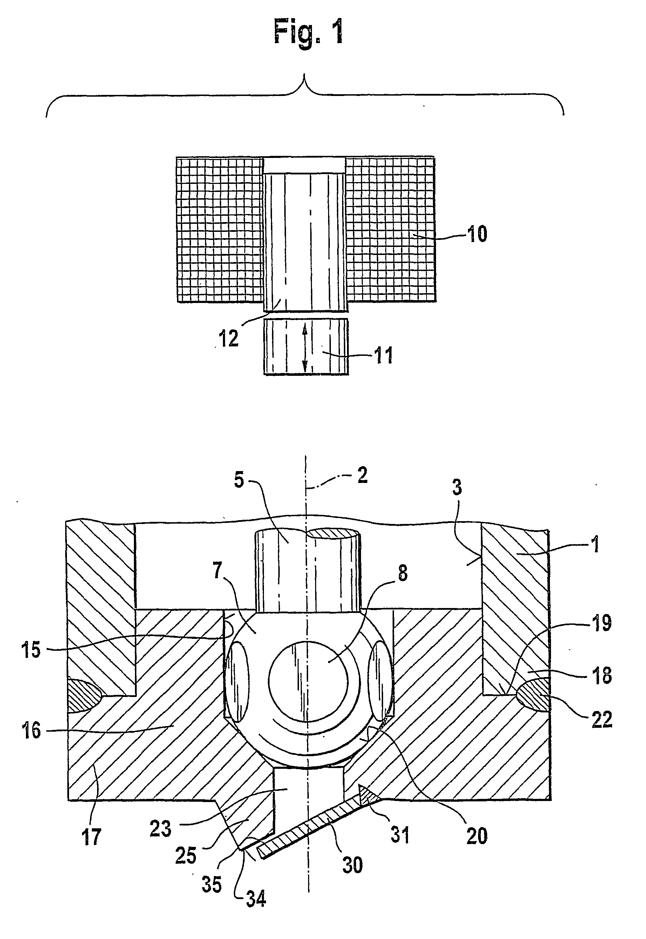

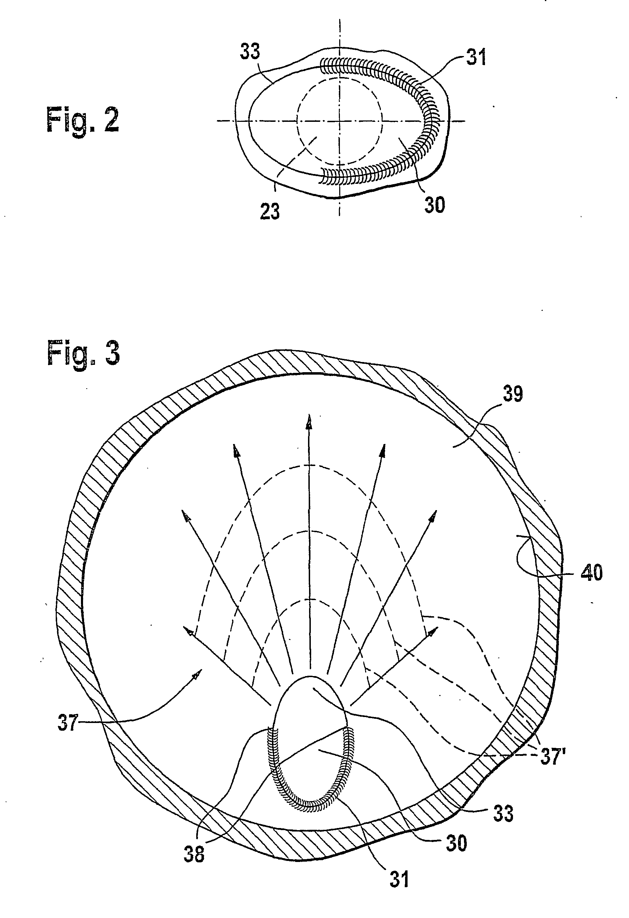

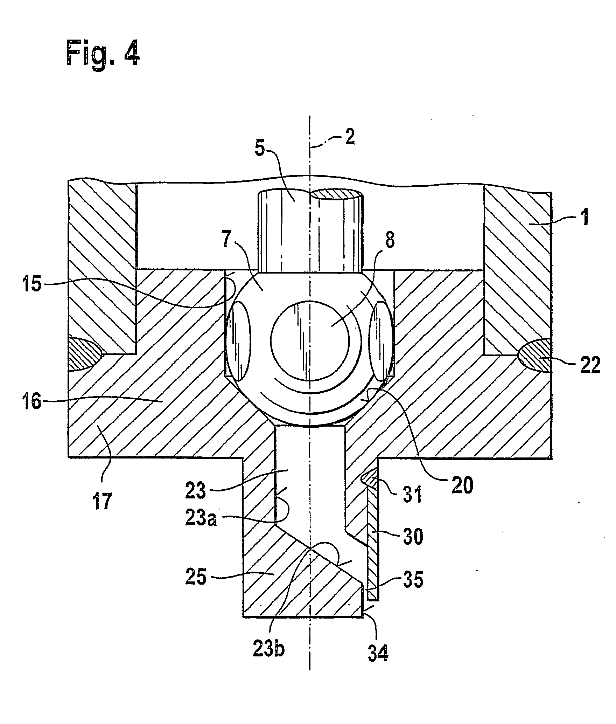

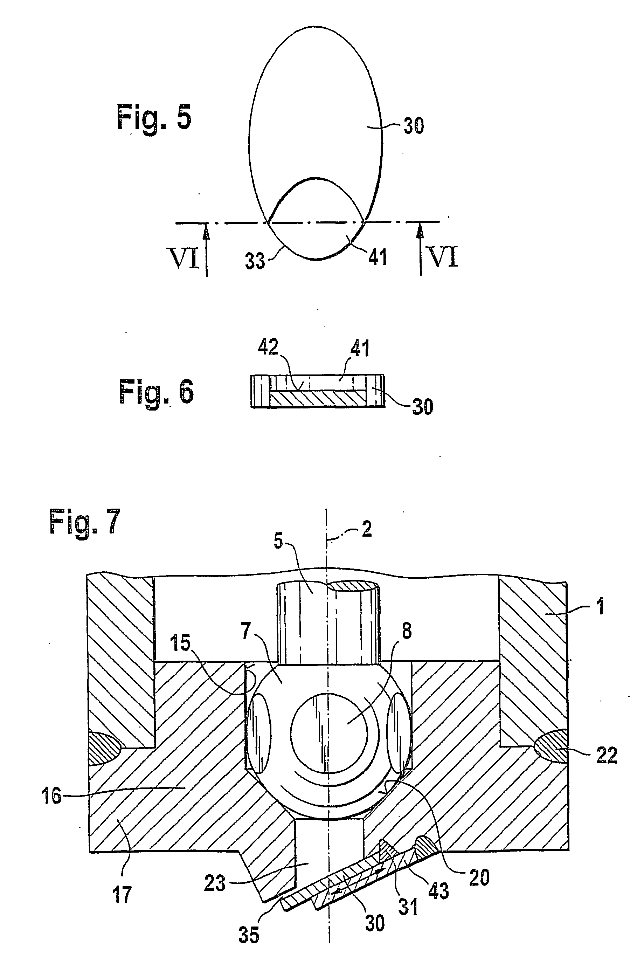

Ausführungsbeispiele der Erfindung sind in der Zeichnung vereinfacht dargestellt und in der nachfolgenden Beschreibung näher erläutert. Es zeigen Figur 1 ein teilweise dargestelltes Brennstoffeinspritzventil mit einer ersten erfindungsgemäßen Abspritzgeometrie, Figur 2 das an dem Brennstoffeinspritzventil gemäß Figur 1 verwendete Schlitzbildungselement in einer Unteransicht, Figur 3 eine idealisierte Darstellung eines mit dem Brennstoffeinspritzventil gemäß Figur 1 abspritzbaren Fächerstrahls, Figur 4 ein zweites Beispiel eines Brennstoffeinspritzventils in der gleichen Ansicht wie Figur 1, Figur 5 eine Draufsicht auf ein nicht erfindungsgemäßes Schlitzbildungselement, Figur 6 einen Schnitt entlang der Linie VI-VI in Figur 5 und Figur 7 ein anderes Beispiel eines Brennstoffeinspritzventils in der gleichen Ansicht wie Figur 1.

### Beschreibung der Ausführungsbeispiele

In der Figur 1 ist ein Ventil in der Form eines Einspritzventils für Brennstoffeinspritzanlagen von gemischverdichtenden fremdgezündeten Brennkraftmaschinen teilweise dargestellt. Das Brennstoffeinspritzventil eignet sich besonders als Hochdruckeinspritzventil zum direkten Einspritzen von Brennstoff in einen Brennraum einer Brennkraftmaschine. Das in Figur 1 dargestellte Einspritzventil hat einen rohrförmigen Ventilsitzträger 1, in dem konzentrisch zu einer Ventillängsachse 2 eine Längsöffnung 3 ausgebildet ist. In der Längsöffnung 3 ist eine z. B. stangenförmige Ventilnadel 5 angeordnet, die an ihrem stromabwärtigen Ende mit einem z. B. kugelförmigen Ventilschließkörper 7, an dessen Umfang beispielsweise fünf Abflachungen 8 zum Vorbeiströmen des Brennstoffs vorgesehen sind, fest verbunden ist.

Die Betätigung des Einspritzventils erfolgt in bekannter Weise, beispielsweise elektromagnetisch. Ein Piezoaktor als erregbares Betätigungselement ist jedoch ebenso denkbar. Ebenso ist eine Betätigung über einen gesteuert druckbelasteten Kolben denkbar. Zur axialen Bewegung der Ventilnadel 5 und damit zum Öffnen entgegen der Federkraft einer nicht dargestellten Rückstellfeder bzw. Schließen des Einspritzventils dient ein schematisch angedeuteter elektromagnetischer Kreis mit einer Magnetspule 10, einem Anker 11 und einem Kern 12. Der Anker 11 ist mit dem dem Ventilschließkörper 7 abgewandten Ende der Ventilnadel 5 durch z. B. eine mittels eines Lasers hergestellte Schweißnaht verbunden und auf den Kern 12 ausgerichtet.

Zur Führung des Ventilschließkörpers 7 während der Axialbewegung dient eine Führungsöffnung 15 eines Ventilsitzkörpers 16, der in dem stromabwärts liegenden Ende 18 des Ventilsitzträgers 1 in der Längsöffnung 3 eingebracht ist. Der Ventilsitzkörper 16 hat z.B. einen umlaufenden Flansch 17, der das stromabwärtige Ende 18 des Ventilsitzträgers 1 untergreift. Die Oberseite 19 des umlaufenden Flansches 17 wird z.B. in einer Aufspannung mit der Führungsöffnung 15 und einer im Ventilsitzkörper 16 vorgesehenen Ventilsitzfläche 20 geschliffen. Das Einschieben des Ventilsitzkörpers 16 erfolgt bis zur Anlage der Oberseite 19 des Flansches 17 am Ende 18 des Ventilsitzträgers 1. Die Befestigung des Ventilsitzkörpers 16 erfolgt z.B. durch eine mittels eines Lasers erzielte Schweißnaht 22 im Anlagebereich der beiden Bauteile 1 und 16.

Stromabwärts der sich beispielsweise in Strömungsrichtung kegelstumpfförmig verjüngenden Ventilsitzfläche 20 ist eine z.B. kreisförmige Austrittsöffnung 23 im Ventilsitzkörper 16 ausgebildet, die in einem zumindest teilweise überstehenden Abspritzbereich 25 endet. Weitgehend verschlossen ist die Austrittsöffnung 23 durch ein an ihrem stromabwärtigen Ende vorgesehenes Schlitzbildungselement 30, das in den Ausführungsbeispielen jeweils als dünne membranartige, elliptische Lasche ausgeführt ist.

Das Schlitzbildungselement 30 ist am Ventilsitzkörper 16 beispielsweise mittels einer Schweißnaht 31 befestigt. Die Schweißnaht 31 verläuft nur über einen Teil des Umfangs des Schlitzbildungselements 30. In Figur 2, die das an dem Brennstoffeinspritzventil gemäß Figur 1 verwendete Schlitzbildungselement 30 in einer Unteransicht zeigt, ist erkennbar, dass die Schweißnaht 31 um mehr als 50% des Umfangs des Schlitzbildungselements 30 umläuft. In idealer Weise beträgt der verschweißte Umfang zwischen 50 und 75% des Gesamtumfangs des Schlitzbildungselements 30. Der restliche Teil des Umfangs des Schlitzbildungselements 30 liegt als freier Umfangsabschnitt 33 vor.

Während das Schlitzbildungselement 30 im Befestigungsbereich, also im Bereich der Schweißnaht 31 zwangsläufig unmittelbar dicht an einer unteren Stirnseite 34 des Abspritzbereichs 25 anliegt, ist die untere Stirnseite 34 im Bereich des freien Umfangsabschnitts 33 des Schlitzbildungselements 30 derart ausgeformt, dass Stirnseite 34 und Schlitzbildungselement 30 geringfügig beabstandet zueinander liegen. Über 25 bis 50% des Umfangs des Schlitzbildungselements 30 liegt somit ein schlitzförmiger Strömungsaustritt 35 vor. Das Schlitzbildungselement 30 ist beispielsweise schräg geneigt, d.h. unter einem von 90° zur Ventillängsachse 2 abweichenden Winkel angeordnet, so dass ein abzuspritzendes Brennstoffspray ebenfalls schräg geneigt austreten kann.

In vorteilhafter Weise kann die Weite des Strömungsaustritts 35 variiert werden. Die Querschnittsfläche des Strömungsaustritts 35 ändert sich nämlich in Abhängigkeit des auf dem Schlitzbildungselement 30 lastenden hydraulischen Drucks und der damit verbundenen plastischen Verformung des Schlitzbildungselements 30 im Bereich des freien Umfangsabschnitts 33. Auf diese Weise kann gezielt die Durchflussrate des Ventils (dynamische Strömungsmenge) verändert und eingestellt werden.

Der schlitzförmige Strömungsaustritt 35 erlaubt es, in gewünschter Weise ein sogenanntes Fächerstrahlbild 37 zu erzeugen, das insbesondere beim direkten Einspritzen von Brennstoff in einen Brennraum 39 einer Brennkraftmaschine von Vorteil ist. In Figur 3 ist in idealisierter Weise ein erzeugbares Spritzbild dargestellt. Der schlitzförmige Strömungsaustritt 35 sorgt über die Breite des Fächerstrahls 37 für eine unterschiedlich starke Strahlpenetration. Im zentralen Bereich des Strömungsaustritts 35 tritt der Fächerstrahl 37 mit dem größten Massenanteil bzw. der stärksten Strahlpenetration aus, während an den beiden Schlitzenden 38 die Penetration am geringsten ist. Dies sorgt für Fächerstrahlfronten 37', die in vorteilhafter Weise ungleich tief in den Brennraum 39 penetrieren. Der maximal verfügbare Brennraumquerschnitt wird dadurch ohne nennenswerte Benetzung der Brennraumwandung 40 mit Brennstoffspray ausgefüllt. Die maximale Luftmenge wird ohne nennenswerte Wandbenetzung mit Brennstoffspray durchmischt.

In der Figur 4 ist ein zweites Beispiel eines Brennstoffeinspritzventils in der gleichen Ansicht wie Figur 1 dargestellt. Dabei ist der mittlere Abspritzbereich 25 stromabwärts des Ventilsitzes 20 deutlich herausstehend ausgebildet. Die Austrittsöffnung 23 verläuft in zwei Abschnitten, einem achsparallel verlaufenden ersten Abschnitt 23a und einem dazu abgewinkelten zweiten Abschnitt 23b, der z.B. einen Winkel von ca. 50 bis 75° mit der Ventillängsachse 2 einschließt. Der Abspritzbereich 25 weist eine weitgehend zylindrische Form mit einer parallel zur Ventillängsachse 2 verlaufenden Mantelfläche auf. Entsprechend ist das Schlitzbildungselement 30 ebenfalls achsparallel ausgerichtet und verläuft entweder in Umfangsrichtung gewölbt oder an einer Abflachung des Abspritzbereichs 25 eben. Durch die steile Anstellung des Schlitzbildungselements 30 tritt der Fächerstrahl 37 weitgehend achsparallel aus dem schlitzförmigen Strömungsaustritt 35 aus.

Falls aus Festigkeitsgründen eine höhere Struktursteifigkeit des Schlitzbildungselements 30 gefordert ist, kann das Schlitzbildungselement 30 auch mit einer größeren Dicke ausgeführt sein. Dann kann jedoch das Einstellen der Breite des schlitzförmigen Strömungsaustritts 35 nicht mehr über ein Verbiegen des Schlitzbildungselements 30 erfolgen. In diesem Falle ist es notwendig, den Strömungsaustritt 35 mit einer an dem Schlitzbildungselement 30 ausgeformten muldenförmigen Vertiefung 41 zu erzielen. Figur 5 zeigt eine anströmseitige Draufsicht auf ein nicht erfindungsgemäßes Schlitzbildungselement 30 mit Vertiefung 41. In vorteilhafter Weise ist die Vertiefung 41 als Kreissektor am freien Umfangsabschnitt 33 des Schlitzbildungselements 30 ausgeführt, so dass der Öffnungswinkel des Kreissektors den Ausbreitungswinkel des Fächerstrahls 37 vorgibt. Die Vertiefung wird z.B. mittels Prägen hergestellt. Figur 6 zeigt einen Schnitt entlang der Linie VI-VI in Figur 5. Die Vertiefung 41 verläuft beispielsweise über die halbe Dicke des Schlitzbildungselements 30. Zwischen dem Vertiefungsgrund 42 der Vertiefung 41 und der Stirnseite 34 des Ventilsitzkörpers 16 ist der Strömungsaustritt 35 festgelegt.

Die Steifigkeit des membranartigen Schlitzbildungselements 30 kann auch durch eine andere Maßnahme erhöht werden, die in Figur 7 dargestellt ist. Zur Erhöhung der Steifigkeit wird hierbei ein scheibenförmiges Stützelement 43 unmittelbar unter dem Schlitzbildungselement 30 angebracht. Das Stützelement 43 untergreift dabei das Schlitzbildungselement 30 nur teilweise. Im unterstützen Bereich verhindert das Stützelement 43 eine druckbedingte Verbiegung des Schlitzbildungselements 30. Im nichtunterstützten Bereich kann sich das Schlitzbildungselement 30 jedoch immer noch in gewünschter Weise verbiegen. Die Biegesteifigkeit des Schlitzbildungselements 30 kann dadurch wunschgemäß eingestellt werden, dass die Position des Stützelements 43 vor dessen Fixierung variabel festgelegt werden kann.

## Patentansprüche

1. Brennstoffeinspritzventil für Brennstoffeinspritzanlagen von Brennkraftmaschinen, insbesondere zum direkten Einspritzen von Brennstoff in einen Brennraum einer Brennkraftmaschine, mit einer Ventillängsachse (2), mit einem Aktuator (10, 11, 12), mit einem beweglichen Ventilteil (5, 7), das zum Öffnen und Schließen des Ventils mit einem festen Ventilsitz (20) zusammenwirkt, der an einem Ventilsitzkörper (16) ausgebildet ist, und mit einer stromabwärts des Ventilsitzes (20) im Ventilsitzkörper (16) ausgebildeten Austrittsöffnung (23), wobei am stromabwärtigen Ende der Austrittsöffnung (23) ein die Austrittsöffnung (23) weitgehend verschließendes Schlitzbildungselement (30) angeordnet ist, das zwischen sich und einer Stirnseite (34) des Ventilsitzkörpers (16) einen schlitzförmigen Strömungsaustritt (35) freilässt,
wobei das Schlitzbildungselement (30) mittels einer Schweißnaht (31) am Ventilsitzkörper (16) befestigt ist und die Schweißnaht (31) oder der Befestigungsbereich (31) nur über einen Teil des Umfangs des Schlitzbildungselements (30) verläuft, und
wobei außerhalb des Befestigungsbereichs (31) ein freier Umfangsabschnitt (33) des Schlitzbildungselements (30) vorliegt, zwischen dem und der Stirnseite (34) des Ventilsitzkörpers (16) der Strömungsaustritt (35) gebildet ist,
**dadurch gekennzeichnet,**
**dass** das Schlitzbildungselement (30) als ebenes membranartiges Schlitzbildungselement (30) ausgebildet ist, und
**dass** die untere Stirnseite (34) im Bereich des freien Umfangsabschnitts (33) des Schlitzbildungselements (30) derart vertieft gegenüber der Ebene der unteren Stirnseite (34) in dem Befestigungsbereich des Schlitzbildungselements (30) ausgeformt ist, dass die Stirnseite (34) und das Schlitzbildungselement (30) geringfügig beabstandet zueinander liegen.

2. Brennstoffeinspritzventil nach Anspruch 1, **dadurch gekennzeichnet, dass** das Schlitzbildungselement (30) eine elliptische Form hat.

3. Brennstoffeinspritzventil nach Anspruch 1 oder 2, **dadurch gekennzeichnet, dass** die Schweißnaht (31) um 50 bis 75% des Gesamtumfangs des Schlitzbildungselements (30) umläuft.

4. Brennstoffeinspritzventil nach einem der vorhergehenden Ansprüche, **dadurch gekennzeichnet, dass** der Strömungsaustritt (35) abseits der Ventillängsachse (2) liegt.

5. Brennstoffeinspritzventil nach einem der vorhergehenden Ansprüche, **dadurch gekennzeichnet, dass** das Schlitzbildungselement (30) schräg geneigt, d.h. unter einem von 90° zur Ventillängsachse (2) abweichenden Winkel angeordnet ist.

6. Brennstoffeinspritzventil nach einem der vorhergehenden Ansprüche, **dadurch gekennzeichnet, dass** das Schlitzbildungselement (30) im Ventilbetrieb plastisch verformbar ist und somit die Weite des Strömungsaustritts (35) variabel einstellbar ist.

7. Brennstoffeinspritzventil nach einem der vorhergehenden Ansprüche, **dadurch gekennzeichnet, dass** zur Erhöhung der Steifigkeit ein scheibenförmiges Stützelement (43) unmittelbar unter dem Schlitzbildungselement (30) angebracht ist.

## Claims

1. Fuel injection valve for fuel injection systems of internal combustion engines, in particular for the direct injection of a fuel into a combustion space of an internal combustion engine, with a valve longitudinal axis (2), with an actuator (10, 11, 12), with a movable valve part (5, 7) which, for opening and closing the valve, cooperates with a fixed valve seat (20) which is formed on a valve-seat body (16), and with an outlet port (23) formed downstream of the valve seat (20) in the valve-seat body (16), there being arranged at the downstream end of the outlet port (23) a slot-forming element (30) which largely closes the outlet port (23) and which between itself and an end face (34) of the valve-seat body (16) leaves free a slot-shaped flow outlet (35), the slot-forming element (30) being fastened to the valve-seat body (16) by means of a weld seam (31), and the weld-seam (31) or the fastening region (31) running only over part of the circumference of the slot-forming element (30), and there being outside the fastening region (31) a free circumferential portion (33) of the slot-forming element (30) between which and the end face (34) of the valve-seat body (16), the flow outlet (35) is formed, **characterized in that** the slot-forming element (30) is designed as a plane diaphragm-like slot-forming element (30), and **in that**, in the region of the free circumferential portion (33) of the slot-forming element (30), the lower end face (34) is shaped so as to be recessed with respect to the plane of the lower end face (34) in the fastening region of the slot-forming element (30), in such a way that the end face (34) and the slot-forming element (30) lie slightly apart from one another.

2. Fuel injection valve according to Claim 1, **characterized in that** the slot-forming element (30) has an elliptical shape.

3. Fuel injection valve according to Claim 1 or 2, **characterized in that** the weld seam (31) runs around 50 to 75% of the overall circumference of the slot-forming element (30).

4. Fuel injection valve according to one of the preceding claims, **characterized in that** the flow outlet (35) lies beyond the valve longitudinal axis (2).

5. Fuel injection valve according to one of the preceding claims, **characterized in that** the slot-forming element (30) is inclined obliquely, that is to say is arranged at an angle deviating from 90° with respect to the valve longitudinal axis (2).

6. Fuel injection valve according to one of the preceding claims, **characterized in that**, when the valve is in operation, the slot-forming element (30) is deformable plastically, and therefore the width of the flow outlet (35) can be set variably.

7. Fuel injection valve according to one of the preceding claims, **characterized in that**, to increase rigidity, a disc-shaped supporting element (43) is attached directly underneath the slot-forming element (30).

## Revendications

1. Injecteur de carburant pour des systèmes d'injection de carburant de moteurs à combustion interne, en particulier pour l'injection directe de carburant dans une chambre de combustion d'un moteur à combustion interne, avec un axe longitudinal de soupape (2), un actionneur (10, 11, 12) et une pièce de soupape mobile (5, 7) qui coopère avec un siège de soupape fixe (20) pour ouvrir et fermer la soupape, lequel est formé sur un corps de siège de soupape (16), et avec un orifice de sortie (23) formé dans le corps de siège de soupape (16) en aval du siège de soupape (20), dans lequel se trouve, à l'extrémité aval de l'orifice de sortie (23), un élément de formation de fente (30) fermant largement l'orifice de sortie (23), qui laisse libre une sortie d'écoulement en forme de fente (35) entre lui-même et une face frontale (34) du corps de siège de soupape (16), dans lequel l'élément de formation de fente (30) est fixé au corps de siège de soupape (16) au moyen d'un cordon de soudure (31) et le cordon de soudure (31) ou la zone de fixation (31) ne court que sur une partie du périmètre de l'élément de formation de fente (30), et dans lequel se trouve, à l'extérieur de la zone de fixation (31), une partie libre (33) du périmètre de l'élément de formation de fente (30), la sortie d'écoulement (35) étant formée entre celle-ci et la face frontale (34) du corps de siège de soupape (16),
**caractérisé en ce que**
l'élément de formation de fente (30) est un élément plan (30) réalisé sous forme de membrane, et la face frontale inférieure (34) est, dans la région de la partie libre (33) du périmètre de l'élément de formation de fente (30), en retrait par rapport au plan de la face frontale inférieure (34) dans la zone de fixation de l'élément de formation de fente (30), de telle manière que la face frontale (34) et l'élément de formation de fente (30) soient légèrement espacés l'un de l'autre.

2. Injecteur de carburant selon la revendication 1,
**caractérisé en ce que**
l'élément de formation de fente (30) présente une forme elliptique.

3. Injecteur de carburant selon la revendication 1 ou 2,
**caractérisé en ce que**
le cordon de soudure (31) s'étend sur 50 à 75 % du périmètre total de l'élément de formation de fente (30).

4. Injecteur de carburant selon l'une quelconque des revendications précédentes,
**caractérisé en ce que**
la sortie d'écoulement (35) est située à l'écart de l'axe longitudinal de soupape (2).

5. Injecteur de carburant selon l'une quelconque des revendications précédentes,
**caractérisé en ce que**
l'élément de formation de fente (30) est incliné en oblique, c'est-à-dire est disposé sous un angle différent de 90° par rapport à l'axe longitudinal de soupape (2).

6. Injecteur de carburant selon l'une quelconque des revendications précédentes,
**caractérisé en ce que**
l'élément de formation de fente (30) est déformable plastiquement pendant le fonctionnement de la soupape et la largeur de la sortie d'écoulement (35) est de ce fait réglable de façon variable.

7. Injecteur de carburant selon l'une quelconque des revendications précédentes,
**caractérisé en ce qu'**
un élément d'appui en forme de disque (43) est disposé immédiatement en dessous de l'élément de formation de fente (30) afin d'augmenter la rigidité.
